# EUROPÄISCHE PATENTSCHRIFT

(11) **EP 0 391 092 B1**
(45) Veröffentlichungstag und Bekanntmachung des Hinweises auf die Patenterteilung: **23.02.1994**
(21) Anmeldenummer: 90104629.2
(22) Anmeldetag: 12.03.1990
(51) Int. Cl.: H02G 15/04, H02G 3/04, H01B 17/30

(54) **Dichtungsanordnung**
Seal assembly
Ensemble d'étanchéité

(30) Priorität: 07.04.1989 DE 3911285
(43) Veröffentlichungstag der Anmeldung: 10.10.1990
(73) Patentinhaber: Leopold Kostal GmbH & Co. KG, 58507 Lüdenscheid (DE)
(72) Erfinder: Singör, Aydin, D-5983 Balve (DE)

(56) Entgegenhaltungen:
- DE-A- 2 205 058
- DE-C- 3 705 958
- GB-A- 737 649
- NL-A- 7 008 541

## Beschreibung

Die vorliegende Erfindung betrifft eine gemäß dem Oberbegriff des Hauptanspruches konzipierte Anordnung zur Abdichtung einer elektrischen Leitung.

Bei einer aus mehreren von einem gemeinsamen Isolierschlauch umgebenen Leitungsadern hergestellten elektrischen Leitung besteht das Problem, daß bei einem Einsatz derselben in feuchter Umgebung Feuchtigkeit von einem Ende oder von einer Schadstelle des Isolierschlauches her eindringen und bis zu den elektrischen Kontaktteilen vordringen kann, wodurch in der Regel ein Funktionsausfall des zugeordneten elektrischen Aggregates verursacht wird.

Zur Vermeidung des Vordringens von Feuchtigkeit bis zu den elektrischen Kontaktteilen einer solchen Leitung ist es bekannt, den einen und/oder den anderen Endbereich des Isolierschlauches mittels einer Vergußmasse abzudichten. Hierbei wird die vom Rand des Isolierschlauches zugeführte Vergußmasse entweder solange nachgefüllt, bis aufgrund der an irgendeiner Stelle einsetzenden Erstarrung die Vergußmasse bis zum Rand gestiegen ist oder es wird um die Leitungsadern herum vor dem endgültigen Sitz des Isolierschlauches in einem bestimmten Abstand von ihren freien Enden eine knetgummiartige Masse befestigt, über die dann der Isolierschlauch so weit gezogen wird, daß eine freie Endzone für das Einfüllen der Vergußmasse zustandekommt. Diese bekannten Verfahren sind aber entweder mit einem hohen Materialeinsatz oder einem hohen Arbeitseinsatz behaftet, wobei hinsichtlich des zuletzt genannten Vorgehens noch zu bemerken ist, daß durch das überziehen des Isolierschlauches über die als Vordichtung anzusehende Dichtmasse es nicht sichergestellt ist, daß die Dichtmasse den gesamten Querschnitt des Isolierschlauches wirklich ausfüllt, so daß auch hierbei die Vergußmasse durchlaufen kann.

Weiterhin ist durch die NL-A-7008541 eine zur Realisierung eines dichten Leitungs-Endverschlusses vorgesehene Dichtungsanordnung bekanntgeworden. Dabei wird am Leitungsende ein Gehäuseteil angeordnet, in dem sich ein trichterförmiges, einerseits den Isolierschlauch der Leitung umschließendes und andererseits an der Innenwandung des Gehäuseteils sich anlegendes Bauelement befindet, das einen Hohlraum zur Aufnahme einer Vergußmasse bildet.
Mit einer solchen Dichtungsanordnung sind aber keine eindeutigen, d.h. reproduzierbaren Dichtverhältnisse realisierbar. Bei einer solchen Ausführungsform besteht nämlich das Problem, daß einerseits relativ viel Abstand zwischen den einzelnen Leitungsadern und andererseits zwischen den Leitungsadern und der Innenwandung des Isolierschlauchs vorhanden ist. Aufgrund dessen dringt die Vergußmasse undefinierbar weit in die Leitung ein, was bedeutet, daß solange Material nachgefüllt werden muß, bis der Prozess durch Stockung der zu Anfang flüssigen Vergußmasse zum Stillstand gekommen ist.

Darüber hinaus ist durch die DE-C 3705958 ein Verfahren zur Abdichtung einer elektrischen Leitung bekanntgeworden, bei dem zwecks Erzielung eines minimalen Arbeits- und Materialeinsatzes eine Vordichtung verwendet wird, die aus einer mittels Injektionsnadel oberhalb eines über eine Vorrichtung zusammengepreßten Leitungsabschnitts einzubringenden, relativ schnell wirksam werdenden Dichtmasse gebildet wird. Hierbei besteht jedoch das Problem, daß aufgrund der dabei benötigten, die Leitungsadern zusammenpressenden Vorrichtung einerseits die Leitungsadern beschädigt werden können, was zu einer unerwünschten elektrisch leitenden Verbindung und somit zu Fehlfunktionen bzw. Ausfällen von nachgeordneten elektrischen Aggregaten führen kann. Andererseits ist es bei der Anwendung einer solchen Vorrichtung nicht zu vermeiden, daß die Oberfläche der elektrischen Leitung beeinträchtigt wird, d.h. auf der Oberfläche des Isolierschlauchs entstehen mehr oder weniger tief eindringenden Markierungen, die einerseits zu einer Undichtigkeit der Leitung führen können und andererseits sich als unschönes, vielfach nicht akzeptables Relief abzeichnen.

Der vorliegenden Erfindung liegt die Aufgabe zugrunde, eine Dichtungsanordnung der eingangs erwähnten Art derart weiterzubilden, daß bei genau definierten Abdichtverhältnissen keine Beeinträchtigung der elektrischen Leitung auftreten kann.

Erfindungsgemäß wird die Aufgabe durch die im kennzeichnenden Teil des Hauptanspruches angegebenen Merkmale gelöst. Dadurch, daß die als Vordichtung anzusehende Tülle an einer bestimmten Stelle der elektrischen Leitung plaziert wird, läßt sich auch der Anteil der Vergußmasse genau vorherbestimmen bzw. dosieren, wodurch selbst bei einem automatischen Arbeitsablauf sichergestellt ist, daß eine einwandfreie Abdichtung zustandekommt.

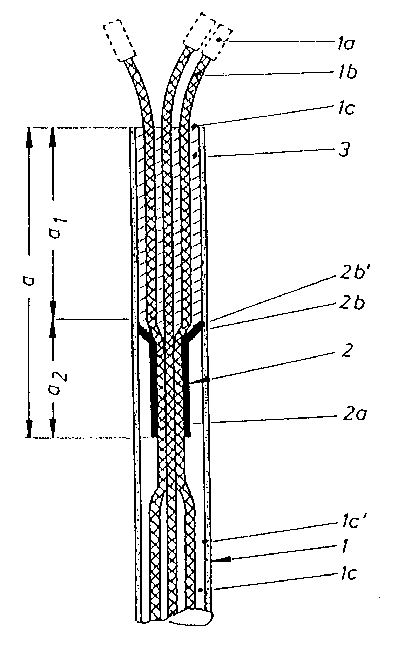

Weitere vorteilhafte Ausgestaltungen des erfindungsgemäßen Gegenstandes sind in den Unteransprüchen angegeben und werden anhand eines in der Zeichnung mehr oder minder schematisch dargestellten Ausführungsbeispieles näher erläutert.

Wie aus der Zeichnung hervorgeht, ist dem Endbereich a einer aus mehreren isolierten, an ihren Enden gegebenenfalls mit Kontaktteilen 1a versehenen Leitungsadern 1b und einem dieselben umhüllenden Isolierschlauch 1c bestehenden elektrischen Leitung 1 eine Dichtungsanordnung zugeordnet. Diese setzt sich aus einer im Isolierschlauch 1c unterhalb eines Endabschnitts a₁ befindlichen, den Abschnitt a₂ einnehmenden Vordichtung 2 und einer den Endabschnitt ausfüllenden Vergußmasse 3 zusammen. Die elastisch ausgeführte, vorzugsweise aus Kunststoff hergestellte Vordichtung 2 ist dabei als eine über eine der Einfachheit halber nicht dargestellte Aufspannvorrichtung auf den Leitungsadern 1b zu plazierende Tülle ausgebildet, die aus einem die Leitungsadern 1b eng aneinander pressenden schlauchförmigen Teil 2a und einem damit einstückig verbundenen trichterartig ausgebildeten Teil 2b besteht. Das trichterartige Teil 2b ist der Vergußmasse 3 zugeordnet und liegt mit seinem ein Durchfließen der Vergußmasse verhindernden Außenrand 2b' an der Innenwand 1c' des Isolierschlauches an.
Nach dem Aufbringen der Vordichtung 2 wird mittels geeignetem, ebenfalls der Einfachheit halber nicht dargestellten Gerät in den nicht von der Vordichtung 2 in Anspruch genommenen Endabschnitt a₁ die vorzugsweise aus einem Polyurethanharz bestehende Vergußmasse 3 eingefüllt, wobei die Leitung 1 in einer auch der Einfachheit halber nicht dargestellten Haltevorrichtung in senkrechter Richtung fixiert ist. Die Leitung 1 bleibt dann noch solange in der Haltevorrichtung, bis die Vergußmasse 3 in einem gewissen Maß ausgehärtet ist. Danach wird die Leitung 1 entweder manuell oder automatisch über geeignete Mittel der Haltevorrichtung entnommen.

## Patentansprüche

1. Dichtungsanordnung an einer aus mehreren in einem Isolierschlauch vorhandenen isolierten Leitungsadern bestehenden elektrischen Leitung, wobei die Endbereiche der Leitungsadern (1b) um eine von den Anschlußgegebenheiten abhängige Länge aus dem Isolierschlauch herausragen und wobei der Isolierschlauch (1c) im Bereich seines einen und/oder anderen Endes durch eine zugeführte, mit einer in den Isolierschlauch (1c) eingebrachten Vordichtung (2) kooperierende Vergußmasse verschlossen ist, **dadurch gekennzeichnet**, daß die Vordichtung (2) aus einer die Leitungsadern (1b) auf einem vorbestimmten Abschnitt (a₂) insgesamt umgebenden elastischen Tülle besteht, daß ein Teil (2a) der Tülle eine die Leitungsadern (1b) eng aneinander pressende schlauchförmige Ausbildung aufweist und daß ein mit dem eine Teil (2a) verbundenes anderes Teil (2b) der Tülle eine trichterartige, mit dem Außenrand (2b′) an der Innenwand (1c′) des Isolierschlauchs (1c) anliegende Konfiguration aufweist.

2. Dichtungsanordnung nach Anspruch 1, dadurch gekennzeichnet, daß die beiden Teile (2a,2b) der aus Kunststoff bestehenden Tülle einstückig miteinander verbunden sind.

3. Dichtungsanordnung nach Anspruch 1 oder 2, dadurch gekennzeichnet, daß das trichterartig ausgebildete Teil (2b) der Tülle mit seinem an der Innenwand (1c′) des Isolierschlauchs (1c) anliegenden Außenrand (2b′) der Vergußmasse (3) zugewandt ist.

## Claims

1. Sealing arrangement for an electrical cable consisting of several insulated electrical conductors within an insulating sleeve in which the end portions of the conductors (1b) protrude from the insulating sleeve by a length determined by the connections to be made and in which the insulation sleeve (1c) is sealed at its one and/or other end by a pourable sealing compound working together with a presealing element (2) placed in the insulating sleeve (1c), characterised in that the presealing element (2) consists of an elastic sheath which encloses all the individual conductors (1b) at a predetermined point (a2), that one portion (2a) of the sheath is in the form of a tube which presses the conductors (1b) closely together and that another portion (2b) of the sheath, joined with the aforementioned tubular portion (2a), is in the shape of a funnel, whose outer edge (2b') fits tightly against the inside wall (1c') of the insulating sleeve (1c).

2. Sealing arrangement as in Claim 1, characterised in that the sheath is made of plastic material and that both portions (2a,2b) are manufactured together in one piece.

3. Sealing arrangement as in Claim 1 or 2, characterised in that the outer edge (2b') of the funnel-shaped portion (2b) of the sheath, which lies against the inner wall (1c') of the insulating sleeve (1c), faces towards the pourable sealing compound (3).

## Revendications

1. Disposition d'une étanchéité sur un faisceau électrique existant, formé d'un manteau isolant et de differents brins électriques isolés , óu l'extrémité des brins (1b) d'une longueur dépendante des condition de connexion sort du manteau isolant et oú le manteau isolant (1c) est lui même fermé par une masse coulé coopérant avec une pré-étanchéité , introduite auparavant à l'une ou/et l'autre extrémité du faisceau électrique , caractérisé par le fait que la pré-étanchéité (2) comprend une gaine élastique (2) qui premièrement entoure complétement les brins électriques (1b) sur une certaine longueur (a2) , d'autre part cette même gaine (2) qui pendant la première partie (2a) comprime les differents brins électriques , et est reliée à la seconde partie (2b) , et qui forme un entonoir par la configuration de la parroi exterieur (2b') avec la parroi interieur (1c') du manteau isolant (1c) .

2. Disposition des joints d'échantéité d'après la revendication 1, décrit par le fait que les deux pièces ( 2a et 2b ) qui elle meme constitué de deux manchettes en matière plastique , qui relié ensemble constituent une pièce unique .

3. Disposition des joints d'étanchéité d'après les revendications 1 ou bien 2 , décrit par la répresentation de la pièce de la manchette en forme d'entonoir (2b) constitué par parroi interieur (1c') du manteau en contact avec la parroi exterieur (2b') voisine de la masse coulé (3).
